## Europäisches Patentamt
## European Patent Office
## Office européen des brevets

(19)

(11) Numéro de publication: **0 081 442 B1**

(12)

# FASCICULE DE BREVET EUROPEEN

(45) Date de publication du fascicule du brevet:
**19.02.86**

(51) Int. Cl.⁴: **C 08 F 255/02, C 09 J 3/14**

(21) Numéro de dépôt: **82420169.3**

(22) Date de dépôt: **02.12.82**

(54) **Nouvelle polyoléfine greffée et procédé pour sa préparation.**

(30) Priorité: **03.12.81 FR 8122802**

(43) Date de publication de la demande:
**15.06.83 Bulletin 83/24**

(45) Mention de la délivrance du brevet:
**19.02.86 Bulletin 86/8**

(84) Etats contractants désignés:
**DE GB IT NL**

(56) Documents cités:
**FR - A - 1 177 898**
**FR - A - 2 136 017**
**US - A - 3 876 609**
**US - A - 3 953 655**
**US - A - 3 987 122**

**CHEMICAL ABSTRACTS, vol. 82, no. 8, 24 février 1975, page 54, no. 44416n, Columbus, Ohio, USA**

(73) Titulaire: **Etablissement Public dit: CENTRE NATIONAL DE LA RECHERCHE SCIENTIFIQUE (CNRS), 15, Quai Anatole France, F-75700 Paris (FR)**

(72) Inventeur: **Michel, Alain, 2, Avenue Roberto Rossellini, F-69100 Villeurbanne (FR)**

(74) Mandataire: **Laurent, Michel et al, 20 rue Louis Chirpaz Boite Postale 32, F-69130 Lyon-Ecully (FR)**

## Description

L'invention concerne un procédé pour la préparation d'une polyoléfine greffée, notamment d'une polyoléfine ayant d'excellentes propriétés adhésives.

Comme on le sait, le polypropylène isotactique n'adhère pas aux métaux usuels, tel que notamment au fer. Il en est de même vis-à-vis d'autres matériaux tels que le cuir, et les fibres de verre qui sont d'un usage courant pour le renforcement des matières plastiques. Cela limite donc considérablement les applications du polypropylène.

L'invention pallie ces inconvénients.

Ce procédé en trois phases pour la préparation de cette polyoléfine modifiée par greffage dans lequel, dans une première phase, on greffe des péroxydes sur un tronc polyoléfine à l'aide d'un mélange oxygène-ozone, se caractérise en ce que:

— cette première phase de péroxydation est effectuée en lit fluidisé sur un polymère pulvérulent;

— puis, on ajoute à cette polyoléfine péroxydée un monomère vinylique $\underline{M}$ comportant au moins une fonction époxyde;

— enfin, dans une troisième phase, on polymérise le mélange ainsi préparé de polyoléfine péroxydée et du monomère $\underline{M}$ époxydé, lors d'une opération de transformation choisie dans le groupe constitué par le passage en mélangeur interne, le passage dans une extrudeuse, le passage sur une calandre, l'injection, le passage en lit fluide.

En pratique, avantageusement:

— le polymère est du polypropylène;

— ce polypropylène contient des antioxydants, ce qui permet donc d'utiliser commodément des polymères industriels;

— le traitement de greffage des péroxydes s'effectue à température contrôlée, notamment en présence d'un mélange oxygène + ozone ourair + ozone; comme cette réaction est exothermique, on peut, si nécessaire, éventuellement refroidir l'enceinte du réacteur où se déroule la réaction en lit fluide;

— la proportion de monomère $\underline{M}$ peut varier de 1 à 50 parties pour cent de résine (pcr), mais est avantageusement comprise entre 5 à 10 pcr;

— le mélange monomère $\underline{M}$ + polymère péroxydé est effectué à température ambiante (technique dite «dryblend»);

— la polymérisation du monomère $\underline{M}$ s'effectue lors d'une opération classique de transformation, par exemple au mélangeur rapide, dans une extrudeuse, sur une calandre, en injection ou encore en lit fluide (encapsulage), notamment en phase condensée, c'est-à-dire sous forme pulvérulente ou fondue.

La péroxydation des polyoléfines, notamment du polypropylène est bien connue (voir par exemple «European Polymer Journal» 1981 – Vol. 17, pages 1145–1148). De même, il est bien connu d'utiliser ces structures péroxydiques pour amorcer la polymérisation radicalaire des monomères vinyliques (voir par exemple «Journal of Polymer Sciences» 1960 – Vol. 48, pages 477–489 et 1978 Vol. 16, pages 3077–3090). Toutefois, la péroxydation du polypropylène par l'ozone s'accompagne d'une scission des chaines macromoléculaires liée à des processus d'auto-oxydation plus ou moins rapides, mais contrôlables selon le polymère utilisé et les conditions d'ozonisation. En outre, la décroissance de la masse moléculaire entraîne une modification des propriétés mécaniques et rhéologiques de ces polymères qui ne présentent aucune propriété adhésive.

On a également déjà proposé de disperser dans une matrice polypropylène des péroxydes de bas poids moléculaire, tel que par exemple l'hydropéroxyde de tertiobutyle ou de benzoyle, afin d'amorcer la polymérisation de ces mêmes monomères en phase condensée, en phase fondue ou en dispersion aqueuse ou organique. Mais ici, la réaction de greffage s'effectue uniquement par une réaction de transfert, ce qui conduit à des taux de greffage très limités, par exemple en pratique de l'ordre de 10% et même plutôt à des mélanges d'homopolymères. En outre, ces procédés ne confèrent pas au polymère traité des propriétés adhésives particulières ou même seulement appréciables (voir notamment Chemical Abstracts Vol. 82 n° 8 du 24 Février 1975, page 54, abrégé n° 44416n; voir aussi brevet français publié sous le n° 2 136 017 ou brevet américain 3 876 609).

En revanche, dans la technique selon l'invention, la réaction de greffage est amorcée par des structures peroxydiques déjà greffées sur la chaîne polyoléfine, polypropylène notamment, ce qui a pour conséquence d'augmenter considérablement le taux de greffage global par rapport aux techniques évoquées ci-dessus et ce, d'au moins dix fois plus, ce qui est inattendu et également permet de conduire à des polyoléfines adhésives, ce qui est original.

Les polypropylènes modifiés préparés conformément à l'invention présentent les caractéristiques suivantes:

— masse moléculaire en nombre ($\overline{M}n$) comprise entre quelques milliers et 100.000;

— point de fusion identique à celui du polypropylène non modifié, soit 160–165 °C;

— le domaine de viscosité limite à fréquence nulle à l'état fondu $\eta_o$ ($10^3$ à $10^5$ Pa.s à 170 °C) permet l'utilisation de ces polymères dans toutes les opérations classiques de transformation rappelées ci-dessus;

— temps moyen de relaxation à 170 °C $\overline{\lambda}$ de l'ordre de quelques dixièmes à quelques secondes;

— excellentes propriétés adhésives, notamment vis-à-vis du cuir, du fer et des fibres de verre, ce qui est original et inattendu.

La manière dont l'invention peut être réalisée et les avantages qui en découlent ressortiront mieux des exemples de réalisation qui suivent, donnés à titre indicatif et non limitatif.

Exemple 1

Dans une enceinte de fluidisation, à température ambiante (25 °C), on place 200 g de poudre de polypropylène isotactique industriel ne contenant pas d'antioxydant ou de composé stabilisant et dont la masse moléculaire moyenne viscosimétrique ($\overline{M}_v$) est d'environ 327 000.

La fluidisation de polypropylène est assurée par un courant d'oxygène et d'ozone. L'ozone est produite par un ozoniseur à éffluve électrique de marque TRAILIGAZ, modèle Labo 70 commercialisé par TRAILIGAZ. Le débit d'oxygène est réglé à 1 000 litres/heure (1/h) et la concentration en ozone est de 12 milligrammes par litre (mg/1).

Pendant l'ozonisation, on suit l'évolution de la masse moléculaire par mesure viscosimétrique dans la décaline à 135 °C après désactivation des peroxydes et en présence de 0,1% de 2,6-di-tertio-butyl-4-méthylphénol comme antioxydant en appliquant la relation de Mark-Houwink avec $\alpha = 0,8$ et $K = 1,1 \times 10^{-2}$ (ml/g). Le dosage des péroxydes s'effectue en présence d'iodure de potassium en milieu homogène dans la décaline à 135 °C.

Le polypropylène traité de la sorte est très sensible à l'action de l'ozone. Au-delà de quinze minutes de contact, la coupure des chaînes entraîne une modification des propriétés rhéologiques et une chute des propriétés mécaniques du polymère de base.

Après quinze minutes de traitement à température ambiante, c'est-à-dire sans refroidissement, on obtient une poudre blanche:
- contenant $1,1 \times 10^{-5}$ groupement péroxydique par gramme,
- dont la masse moléculaire viscosimétrique $\overline{M}_v$ est d'environ 151 000,
- et dont les propriétés rhéologiques à 170 °C sont:
  - $\eta_0$ : $3,0 \times 10^4$ Pa.s
  - $\lambda$ : 2 secondes.

On prélève ensuite 34 g de cette poudre de polypropylène péroxydée (PPOOH) que l'on mélange à température ambiante avec 8 g de méthacrylate de glycidyle de manière à réaliser un «dry-blend».

On place alors de «dry-blend» dans un plastographe Brabender afin d'amorcer la réaction de polymérisation du méthacrylate de glycidyle au cours du malaxage. Cette polymérisation s'effectue très rapidement en une à deux minutes, dès que la température atteint 120–130 °C pour une vitesse de rotation de 100 tours/minute (min$^{-1}$). La polymérisation est donc complète lorsque la fusion du polymère est atteinte à 165 °C.

Le polymère greffé obtenu se présente sous forme d'une poudre blanche ayant les propriétés suivantes:
- point de fusion 165 °C,
- masse moléculaire ($\overline{M}_v$) de 130.500,
- au moins 60% du monomère introduit (soit 8 g) est réellement greffé sur la chaîne polypropylène,
- paramètres rhéologiques à 170 °C:
  - $\eta_0$ : $5 \times 10^3$ Pa.s
  - $\lambda$ : 0,4 seconde.

**Exemple 2**

On répète l'exemple 1, mais avec du polypropylène commercial contenant un antioxydant phénolique.

Le polypropylène stabilisé est moins sensible à l'action de l'ozone, du moins tant que la température ne dépasse pas 70–80 °C.

Le rendement de greffage obtenu est ici également voisin de 60%.

**Exemple 3**

On répète l'exemple 2 en remplaçant le mélangeur plastographe Brabender par un mélangeur interne Papenmeier. On obtient des résultats analogues.

**Exemple 4**

A titre comparatif, dans un mélangeur rapide type Papenmeier de 10 litres, on mélange à température ambiante:
- 4000 g de polypropylène pulvérulent et stabilisé (marque Napryl 61400 de Naphtachimie),
- 400 g de méthacrylate de glycidyle,
- 10 g d'hydropéroxyde de tertiobutyle (marque TRIGINOX AW 70 commercialisé par NOURYLANDE).

Ce mélange est extrudé à l'aide d'un mélangeur BUSS sous forme de bandes au moyen d'une filière plate dans les conditions et avec les profiles de température suivants:
- vis de malaxage (200–202–205 °C),
- vis d'extrusion (205–210 °C),
- filière (220 °C),
- vitesse de la vis de malaxage 50 tours/minute,
- vitesse de la vis d'extrusion 74 tours/minute.

Dans ces conditions, le débit est de 5,4 kg/heure.

On obtient un polymère se présentant sous forme de poudre blanche ayant un point de fusion de 160 °C dans lequel seulement 10% du monomère introduit (400 g) est réellement greffé sur le polypropylène; en outre, ce polymère, bien qu'ayant exactement les mêmes caractéristiques rhéologiques à 170 °C que le polymère greffé de l'exemple 1, ne présente aucune propriété adhésive vis-à-vis du fer, du cuir ou des fibres de verre.

Cela montre l'effet inattendu obtenu par le procédé selon l'invention.

**Exemple 5**

On répète l'exemple 4 en supprimant l'hydropéroxyde de tertiobutyle et en remplaçant le polypropylène Napryl 61400 par 400 g de polypropylène péroxydé (PPOOH) préparé conformément à l'exemple 1.

On obtient un polymère ayant les mêmes propriétés qu'à l'exemple 1, mais également très adhésif vis-à-vis du fer.

**Exemple 6**

On répète l'exemple 2 en remplaçant le méthacrylate de glycidyle par l'acrylate de glycidyle.

On obtient des produits similaires.

Exemples 7 à 10

On extrude, puis on granule les deux polymères selon l'exemple 4 et 5 et on les utilise:

– soit pour préparer des matériaux composites à base de fibres de verre (ref. 421–ZZ de Owens Corning Fiberglas),

– soit pour préparer des films par laminage en vue d'essais d'adhésion.

Les mélanges polypropylène époxydé – fibres de verre sont extrudés à 220 °C dans les mêmes conditions qu'à l'exemple 4 et sont ensuite granulés avant d'être injectés dans un moule normalisé pour obtenir des éprouvettes en forme d'haltères. Les caractéristiques mécaniques de ce polymère sont rassemblées dans le tableau annexé.

L'ensemble de ces résultats montre que les propriétés mécaniques des matériaux composites polypropylène – fibres de verre sont améliorés pour le polypropylène époxydé en deux étapes conformément à l'invention (exemple 9). On note en outre une augmentation sensible de la résistance au choc, de la résistance en traction et en flexion, ce qui est compatible avec une amélioration de la cohésion fibres de verre – matrice polymère par l'intermédiaire des greffons oxirannes.

Exemple 11

Pour mettre en évidence les propriétés adhésives du polypropylène époxydé vis-à-vis du fer, on utilise l'expérience suivante.

Les granulés de polypropylène époxydé conformément aux enseignements des exemples 1 et 5 sont extrudés à 200–220 °C, puis sont mis sous forme de film par lamination à chaud. Les complexes sandwich-polypropylène – polypropylène époxydé – fer ont été réalisés par un préchauffage à 185 °C durant 5 minutes. Le laminage est effectué entre les rouleaux d'un malaxeur chauffé à 120 °C. Les forces d'adhésion sont déduites d'un test de pelage réalisé avec un angle de 0° à une vitesse de 10 mm/min.

La force d'adhésion (en Newton/cm) du polypropylène époxydé par la technique connue (exemple 4) est de 18, alors qu'en revanche, le film préparé conformément à l'invention, c'est-à-dire selon les exemples 1 et 5, est indécollable du fer.

A titre indicatif, la force d'adhésion mesurée dans les mêmes conditions d'un polypropylène péroxydé (PPOOH) préparé selon les enseignements du préambule de l'exemple 1 est sensiblement nulle.

Celà met en évidence les excellentes propriétés adhésives du polypropylène epoxydé selon l'invention.

Exemple 12

On répète l'exemple 1 en remplaçant le polypropylène par un autre polypropylène d'indice defluidité (grade) 2, de $\overline{M}_v$ 235.000, de viscosité $\eta_o$ à 190 °C de $1,4 \cdot 10^4$ Pa.s et ayant un temps de relaxation moyen $\overline{\lambda}$ de 2,35 secondes. On péroxyde par un mélange air-ozone en lit fluide à 50 °C pendant quinze minutes.

On obtient un PPOOH ayant les caractéristiques suivantes:

· $0,325.10^{-5}$ groupe péroxyde par gramme de polymère,

· $\overline{M}_v$ 225.000.

Après décomposition thermique totale des péroxydes sous azote, ce polymère présente les propriétés suivantes:

· $\overline{M}_v$ 180.000,

· viscosité $\eta_o$ à 190 °C: $4,1.10^3$ Pa.s,

· $\overline{\lambda}$: 0,5 seconde,

· grade (ASTM-D-1238): 6

Exemple 13

Sur le polypropylène péroxydé PPOOH obtenu conformément à l'exemple 12, on greffe dans une cuve de plastographe, dix parties de méthacrylate de glycidyle pendant 25 minutes à 185 °C.

On obtient un polypropylène epoxydé compact ayant les caractéristiques suivantes:

– viscosité $\eta_o$ à 190 °C : $7.10^2$ Pa.s

– $\overline{\lambda}$: 0,08 secondes

– grade (ASTM-D-1238): de l'ordre de 50.

Ces exemples comparatifs 12 et 13 illustrent l'amélioration notable et inattendue de la fluidité des polymères greffés préparés conformément à l'invention par rapport aux polymères de départ ou même aux polypropylènes péroxydés selon les enseignements de l'art antérieur. Cela permet:

– d'une part, d'utiliser ces polypropylènes epoxydés comme matières liantes des nappes ou de mats textiles, en fibres de verre notamment,

– et d'autre part, d'améliorer considérablement la vitesse de filature-extrusion de ces polymères, ce que l'on ne savait pas faire économiquement jusqu'alors.

Les polypropylènes epoxydés greffés selon l'invention présentent de nombreux avantages. On peut citer:

– des propriétés mécaniques améliorées;

– une excellente cohésion avec les fibres de verre de renforcement des matières plastiques;

– surtout d'excellentes propriétés adhésives, notamment vis-à-vis du fer, du cuir et des fibres de verre, ce que l'on ne savait pas obtenir jusqu'alors, notamment avec les polypropylènes péroxydés;

– amélioration exceptionnelle de la fluidité des polymères de départ, ce qui d'une manière tout à fait inattendue, permet d'augmenter considérablement la vitesse de filature-extrusion de ces polymères.

Tableau

| Ex. nº | Polypropylène Nature | Taux en % | Fibres de verre Taux en % | Résistance au choc Charpy sans entaille à −20 °C kJ/m² | Résistance Traction Résistance au seuil MPa (Mega Pascal) | Module MPa | Allongement % | Résistance Flexion Résistance MPa | Module MPa |
|---|---|---|---|---|---|---|---|---|---|
| 7 | Napryl 61400 | 100 | 0 | 10,2 | 33,3 | 1260 | 390 | 32,2 | 1180 |
| 8 | Napryl 61400 | 70 | 30 | 11,4 | 39,8 | 5415 | 18 | 50,4 | 3350 |
| 9 | Polypropylène epoxydé selon Ex.5. | 70 | 30 | 17,6 | 68,1 | 5665 | 13 | 95,8 | 4120 |
| 10 | Polypropylène epoxydé selon Ex.4. | 70 | 30 | 7,4 | 46,7 | 5615 | 8 | 76,6 | 4190 |

0 081 442

## Revendications

1. Procédé en trois phases pour la préparation d'une polyoléfine modifiée par greffage, dans lequel, dans une première phase, on greffe des péroxydes sur un tronc polyoléfine à l'aide d'un mélange oxygène-ozone, caractérisé en ce que:

— cette première phase de péroxydation est effectuée en lit fluidisé sur un polymère pulvérulent;

— puis, dans une seconde phase, on ajoute à cette polyoléfine péroxydée un monomère vinylique M comportant au moins une fonction époxyde;

— enfin, dans une troisième phase, on polymérise le mélange ainsi préparé de polyoléfine péroxydée et du monomère M époxydé, lors d'une opération de transformation choisie dans le groupe constitué par le passage en mélangeur interne, le passage dans une extrudeuse, le passage sur une calandre, l'injection, le passage en lit fluide.

2. Procédé selon la revendication 1, caractérisé en ce que le polymère est du polypropylène.

3. Procédé selon la revendication 2, caractérisé en ce que le polypropylène contient des antioxydants.

4. Procédé selon la revendication 1, caractérisé en ce que le monomère vinylique M comportant une fonction époxyde est choisi dans le groupe constitué par la méthacrylate et l'acrylate de glycidyle.

5. Procédé selon la revendication 1, caractérisé en ce que le mélange de la polyoléfine péroxydée et du monomère époxydé s'effectue au «dry-blend».

6. Procédé selon la revendication 1, caractérisé en ce que la proportion de monomère vinylique époxydé M est comprise entre 5 et 10 parties pour cent de résine péroxydée.

7. Procédé pour la préparation d'un polypropylène modifié par greffage caractérisé en ce qu'il consiste:

— dans une première phase, à greffer en lit fluidisé des péroxydes sur un tronc polypropylène sous forme de poudre, à l'aide d'un mélange oxygène-ozone;

— dans une seconde phase, à ajouter à ce polypropylène péroxydé un monomère vinylique ayant une fonction époxyde choisi dans le groupe constitué par le méthacrylate et d'acrylate de glycidyle, par la technique de mélange au «dry-blend», la proportion de monomère vinylique époxydé M étant comprise entre 5 et 10 parties pour cent de résine de polypropylène péroxydé;

— et enfin, dans une troisième phase, à polymériser le mélange ainsi obtenu par une réaction de polymérisation du type radicalaire, en phase condensée, durant une opération de transformation choisie dans le groupe constitueé par le passage en mélangeur interne, le passage dans une extrudeuse, le passage sur une calandre, l'injection, le passage en lit fluide.

8. Polypropylène époxydé à propriétés adhésives obtenu par le procédé selon l'une des revendications 1 à 7.

## Patentansprüche

1. Dreistufiges Verfahren zur Herstellung eines durch Pfropfung modifizierten Polyolefins, bei welchem in einer ersten Phase Peroxide auf eine Polyolefinpfropfgrundlage mit Hilfe eines Sauerstoff-Ozon-Gemisches aufgepfropft werden, dadurch gekennzeichnet, dass man

— diese erste Stufe der Peroxidierung in einem Wirbelbett an einem pulverförmigen Polymer durchführt,

— danach in einer zweiten Stufe diesem peroxidierten Polyolefin ein Vinylmonomeres M hinzugibt, welches wenigstens eine Epoxygruppe aufweist, und

— schliesslich in einer dritten Stufe das Gemisch aus dem in dieser Weise hergestellten peroxidierten Polyolefin und dem wenigstens eine Epoxygruppe aufweisenden Monomeren M mittels eines Verarbeitungsvorganges polymerisiert, der aus einer Gruppe von Vorgängen ausgewählt ist, welche dargestellt ist durch den Durchgang durch eine Mischeinrichtung mit Innenmischung, den Durchgang in einer Extrudiervorrichtung, den Durchgang durch einen Kalander, durch Injektion und den Durchgang durch ein Wirbelbett.

2. Verfahren nach Anspruch 1, dadurch gekennzeichnet, dass das Polymer Polypropylen ist.

3. Verfahren nach Anspruch 2, dadurch gekennzeichnet, dass das Polypropylen Antioxidantien enthält.

4. Verfahren nach Anspruch 1, dadurch gekennzeichnet, dass das Vinylmonomere M, welches eine Epoxygruppe aufweist, aus der Gruppe ausgewählt ist, die durch Methacrylat und Glycidylacrylat dargestellt ist.

5. Verfahren nach Anspruch 1, dadurch gekennzeichnet, dass das Gemisch aus dem peroxidierten Polyolefin und dem eine Epoxygruppe aufweisenden Monomeren durch Trockenmischen bewirkt wird.

6. Verfahren nach Anspruch 1, dadurch gekennzeichnet, dass der Anteil des Vinylmonomeren mit einer Epoxygruppe M zwischen 5 und 10 Prozentteilen des peroxidierten Harzes liegt.

7. Verfahren zur Herstellung eines durch Pfropfung modifizierten Polypropylens, dadurch gekennzeichnet, dass es besteht

— aus einer ersten Stufe, in der man in einem Wirbelbett auf eine Polypropylengrundlage in Form eines Pulvers mit Hilfe eines Sauerstoff-Ozon-Gemisches Peroxide aufpfropft,

— aus einer zweiten Stufe, in der man zu diesem peroxidierten Polypropylen ein Vinylmonomeres mit einer Epoxygruppe, das aus der Gruppe Methacrylat und Glycidylacrylat ausgewählt ist, mittels der Trockenmischtechnik zugibt, wobei der Anteil des Vinylmonomeren mit der Epoxygruppe M zwischen 5 und 10 Prozentteilen des peroxidierten Polypropylenharzes liegt, und schliesslich

— aus einer dritten Stufe, in der man das auf diese Weise erhaltene Gemisch mittels Radikalpolymerisationsreaktion in einer kondensierten Phase während eines Verarbeitungsvorganges polymerisiert, der aus der Gruppe Durchgang durch einen Innenmischer, Durchgang durch eine

Extrudiervorrichtung, Durchgang durch einen Kalander, Injektion und Durchgang durch ein Wirbelbett ausgewählt ist.

8. Epoxidiertes Polypropylen mit klebenden Eigenschaften nach einem der Ansprüche 1 bis 7.

## Claims

1. A three phases process for preparing a polyolefin modified by grafting, in which, in a first phase, peroxides are grafted onto a polyolefin chain with a mixture of oxygen and ozone, characterized by the fact that:

– this first phase of peroxidation is conducted in a fluid bed with a polymer in powder form;

– then, in a second phase, a vinyl monomer $\underline{M}$ with at least one opoxy function is added to this resulting peroxidized polyolefin;

– and after all, in a third phase, the resulting mixture of this peroxidized polyolefin and of the epoxidized monomer $\underline{M}$ is polymerised during a processing operation selected from the group consisting of passage through an internal mixer, passage through an extruder, passage over a calender, an injection press or passage through a fluid bed.

2. Process according to claim 1, wherein the polymer is polypropylen.

3. Process according to claim 2, wherein the said polypropylen contains antioxydants.

4. Process according to claim 1, wherein the vinyl monomer $\underline{M}$ with the epoxy function is selected from the group consisting of glycidyl metacrylate and acrylate.

5. Process according to claim 1, wherein the mixture of the peroxidized polypropylen with the epoxidized monomer is mixed according to the dry-blend mixing technique.

6. Process according to claim 1, wherein the proportion of epoxidized vinyl monomer $\underline{M}$ is between 5 to 10 parts per one hundred parts of peroxidized resin.

7. Process for preparing a polypropylen modified by grafting, wherein:

– in a first phase, peroxides are grafted, in a fluid bed, onto a polypropylen chain in powder form with a mixture of oxygen and ozone;

– in a second phase, a vinyl monomer with one epoxy function selected from the group consisting in glycidyl metacrylate and acrylate is mixed with the resulting peroxidized polypropylen according to the dry-blend mixing technique, the proportion of the said vinyl monomer $\underline{M}$ being comprised of between 5 to 10 parts per one hundred part of peroxidized polypropylen;

– and after all, in a third phase, the polymerization of the mixture is achieved by a radical-producing polymerization in condensed phase, during a processing operation selected from the group consisting in passage through an extruder, passage over a calender, injection, passage in fluid bed.

8. Epoxidized polypropylen with adhesive properties obtained by the process according to any claims 1 to 7.